# EUROPEAN PATENT APPLICATION

(11) **EP 1 566 632 A1**
(43) Date of publication of application: **24.08.2005**
(21) Application number: 04254035.1
(22) Date of filing: 06.07.2004
(51) Int. Cl.: G01N 31/22

(54) **One step tester for ammonia**

(30) Priority: 03.02.2004 US 771223
(71) Applicant: Precision Laboratories, Inc., Cottonwood, AZ 86326 (US)
(72) Inventor: Hrboticka, Eva, 635 00 Bmo (CZ)
(74) Representative: Jones, Ithel Rhys

(57) **Abstract**

A one-step integral analysis unit for the direct analysis of ammonia, wherein all necessary reagents are located in a single reagent pad comprising an indicator layer and an absorbent layer. The indicator comprises an ammonia indicator embedded in a continuous phase of a hydrophobic polymer so that gaseous ammonia, but not aqueous solutions, can penetrate the embedding polymer and reach the indicator. The second absorbent layer is buffered with hydroxide to maintain the equilibrium concentration level of ammonia to obtain best test color change results. The absorbent layer is attached to a plastic carrier and the indicator layer is attached to the absorption layer.

## Description

### FIELD OF THE INVENTION

This invention relates to a simplified system for a one step analysis or ammonia.

### BACKGROUND OF THE INVENTION

The present invention teaches a one-step "dip and read"-type of an integral analytical element for direct analysis of ammonia (NH₄/NH₃) in water solutions wherein all necessary reagents are placed in one reagent pad. All reactions resulting in a change of color corresponding to ammonia concentrate, take place without requiring a defined volume sampling or releasing of chemicals into a test liquid.

### DESCRIPTION OF THE PRIOR ART

The detection of ammonia in aqueous solutions as practiced today is mostly connected with the analysis of substrates releasing ammonia and employing analytical methods based on colorimetric detection of ammonia.

The release of ammonia by means of alkali from solid or dissolved salts followed by the detection of color change of a pH indicator is a well known method of detecting ammonia. However, the alkali required for the release of gaseous ammonia can also react with the pH indicator and thus interfere with the ammonia/pH indicator reaction.

Systems using test strips and capillary action have been suggested in German patents 1,245,619 and 2,349,647 but require long reaction times.

The use of ammonia detection pH indicators by color changes, such as by use of bromphenol blue, has been suggested in G.B. patent 888,039. Alkaline agents, such as sodium or potassium phosphate or lithium carbonate, are disclosed to establish the necessary pH for the liberation of gaseous ammonia.

U.S. Patent No. 4,356,149 discloses a multi-layer chemical analysis material particularly suitable for analysis of serum urea. It employs a light-transmitting and water-impermeable support and a porous spreading top layer 4. An intermediate reagent layer 23 is composed of a hydrophilic binder. The particles contain a reagent capable of reacting with the component to be analyzed to produce a color change. This analytic system uses an oil-in-water emulsion or dispersion formed by: (1) dissolving the hydrophobic polymer in organic solvent to yield solution A; (2) dissolving the phydrophilic polymer in water to yield solution B; and (3) mixing solutions A and B in an emulsifier to form an emulsion or dispersion. A two-phase system (emulsion, dispersion) with separated hydrophobic particles and a hydrophilic polymer is thus obtained.

The system of U.S. Patent No. 4,356,149 however, is rather complex and involves a costly process and of limited sensitivity. In its examples 2 and 5 for ammonia water analysis (its only quantitative data) it shows ammonia detection in the range of 200-1000 ppm, whereas the present invention deals with levels below 6, and is able to detect ammonia at levels of 0.25 - 0.5 ppm.

### SUMMARY OF THE INVENTION

The present invention provides a one-step integral analysis tester for the direct analysis of ammonia where all the necessary reagents are located within a single pad. Analysis resulting from a change in color occurs without volume sampling or release of chemicals into a test liquid. A very simple and expedient test unit is thereby readily available.

### BRIEF DESCRIPTION OF THE DRAWINGS

Figure 1 is a front view of the testing device of the present invention where A denotes the reacting area;
Figure 2 is a longitudinal section of Figure 1;
Figure 3 is a front view of an alternative structure of the device;
Figure 4 is a longitudinal section of the device of Figure 3;
Figure 5 is a front view of yet another alternative structure of the device;
Figure 6 is a longitudinal section of the device of Figure 5;
Figure 7 is a section view of the invention as formed as a unit for immunology testing; and
Figure 8 is a top plan view thereof.

### DETAILED DESCRIPTION OF THE PRESENT INVENTION

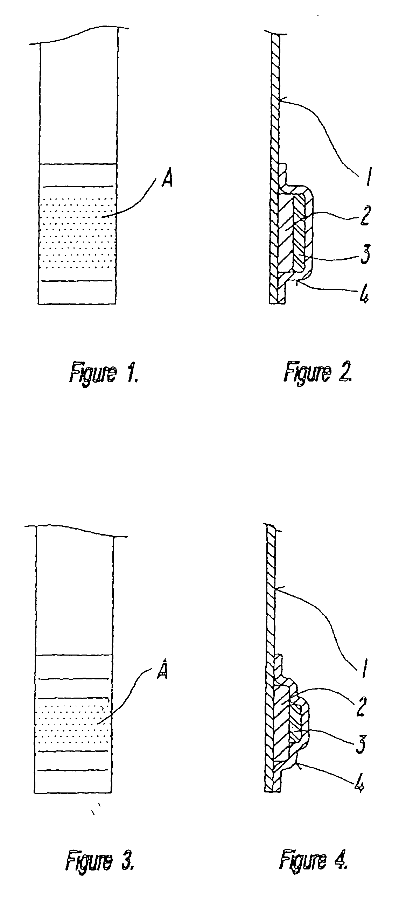

The compact tester of the present invention comprises all necessary reagents in one multiplayer pad comprising an absorbent layer and an indicator layer (best depicted in Figure 1). The absorbent layer comprises a highly absorbent material such as filter paper or high soaking material attached to a plastic carrier serving as the bottom of the overall unit. The absorbent layer materials allow soaking of the test solution into the absorbent pad in a short time without releasing agents backwards into the test solution.

The absorbent layer contains various strong alkaline hydroxide substances, such as sodium, lithium, calcium, potassium or barium hydroxide and mixtures thereof. The alkaline pH maintains the ammonia at suitable levels for best color results.

The alkaline substance in the absorbent layer converts non-reacting ammonia cation (NH₄) to reacting gaseous ammonia (NH₃). It is the only function of alkaline substance present in the pad. It has no influence on indicators (i.e. tetrabromphenol blue). Any interaction of the alkaline substance with indicators must be prevented, so that the reaction of gaseous ammonia + indicator(s) yielding color change can occur.

The indicator layer contains at least one color indicator for ammonia, i.e. a compound that produces a color change or color formation by ammonia. Known indicators may be used, such as bromcresol green, bromphenol blue, tetrabromphenol blue, bromcresol purple, bromphenol red, and tetrabromphenolphtalein ethylester. A mixture of bromphenol blue and tetrabromphenol blue is preferred. In the indicator layer the indicator or indicators are dissolved in alcohol and mixed with alcohol solution of polymer binder and the resulting solution (coating) is applied to a suitable inert resin paper support (such as polyester or polypropylene paper) and dried. The solution gets into the cavities of the paper, covering the paper fibers. Indicator molecules are then suspended or embedded in the polymer in a manner akin to encapsulation. Polymer is water impermeable which is thus impermeable to water-soluble interferants but permeable to gaseous ammonia. This resultant hydrophobic polymer coating creates on the paper fibers a polymer film with properties similar to filter membranes with defined porosity. While various hydrophobic polymers such as ethyl cellulose, cellulose acetate or polystyrene can be used, a hydrophobic polymer mixture of polyvinylbutyrate-polyvinylacetate and polyvinyl alcohol dissolved in isopropanol is preferred.

The aforesaid three-component hydrophobic mixture provides an optimum velocity for the ammonia gas to pass through the indicator layer (good sensitivity without liquid passing through).

Since the time for ammonia to diffuse through the membrane changes according to its thickness, a suitable support for the polymer coating must be provided and a uniform thickness of the permeable layer must be established. The support should be fine structured and smooth on its surface with hydrophobic or slightly hydrophilic properties. Examples include polymer papers such as Reenay and Ahlstrom polyester (PES) and polypropylene (PP) papers or membrane filters on a base of polyethersulfone, regenerated cellulose, polysulfone, polyamide, polyvinylidenfluoride, etc.

The unit is dipped into the solution to be tested for a short period of time (1 to 5 seconds) so that the liquid soaks into the absorbent layer without releasing reagents backward into the test solution

Turning to the drawings as described above, the test device as depicted and as shown in Figures 1-6 is prepared by affixing an absorbent layer 2 onto a base support member 1. Indicator layer 3 is then placed onto the absorbent layer and secured thereon by means of a transparent adhesive layer 4. It completely covers the indicator layer 3 as well as both edges of absorbent layer 2 and indicator layer 3 and is attached by both ends to base support member 1. The liquid to be tested is soaked into the absorbent layer only by side-absorbion.

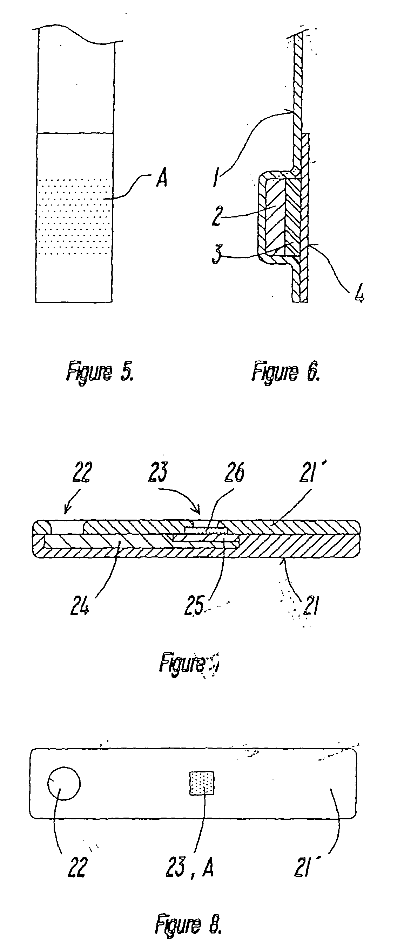

Figures 5 and 6 depict an embodiment of the present invention wherein an elongated flat member of plastic is formed into a well portion 10 at one end. Both absorbent layer 2 and indicator layer 3 are superimposed in the well and are secured therein by transparent tape 4 which completely covers the indicator layer and is attached to the plastic member on both sides of the well.

Figures 7 and 8 illustrate the use of the present invention in a plastic unit frequently used in immunology testing devices (HIV, Chlamydia, etc.). The plastic member may include a base portion 21 having a well therein and a cover portion 21' with a fluid application aperture 22 and a viewing window 23 for observing the color change of the indicator layer 25. The absorbent layer 24 is positioned as a bridge between the fluid application aperture 22 and the viewing window 23. The liquid to be tested is applied through aperture 22 and is wicked to the indicator layer 25 placed on the absorbent layer directly under the viewing window, and secured by transparent foil 26.

The embodiments of Figures 1-4, 5 and 6 are alternatives and distinguished from Figures 7 and 8. Each has its own advantage as to cost and production technology. The embodiment of Figures 1 and 2 is cheaper to produce than the embodiment of Figures 3 and 4, while the embodiment of Figures 5 and 6 is easier to produce but requires a plastic carrier. The embodiment of Figures 7 and 8 is the most expensive but avoids adhesive sealing.

The present invention is capable of ammonia detection well below levels of 3-6 ppm, and normally ammonia levels of 0.25 to 0.5ppm.

Unless otherwise indicated, the term "hydroxide" in the Examples refers to sodium hydroxide. Typically 10% solution of hydroxide is used in the absorbent layer to convert ammonium cations to gaseous ammonia. For long-term reactivity and a longer expiration date, the concentration of the hydroxide solution can be increased from 12% to 14% to ensure alkaline buffering during the life of the product.

Sensitivity in virtual test elements was the lowest concentration at which a color change can be observed as against a blank (distilled water).

### EXAMPLES

### Example 1

An aborbent layer was prepared from Ahlstrom paper impregnated with a 10% solution of hydroxide and dried. It had a thickness of 1.2mm and a pH of 12.

An indicator layer was prepared by dipping Reemay polyester paper, spunbounded filtration grade No. 2295, into the following solution:

| | | |
|---|---|---|
| Bromphenol Blue | 0.03 g | |
| | | color indicator |
| Tetrabromphenol Blue | 0.03 g | |
| Polyvinylbutyral | 7.9 g | |
| Polyvinylalcohol | 2.1 g | hydrophobic polymer mixture |
| Polyvinylacetate | 0.21 g | |
| Ethanol | 75 ml | |

The dry indicator layer was, together with the absorbent layer, mounted on a plastic carrier chosen from polyvinylchloride, polystyrene, polycarbonate or polyethylene terephtalate.

A test was made of an ammonium chloride solution containing 2 ppm ammonia (2 mg ammonia in 1 liter, e.g. 0.0002% ammonia solution) by contacting it with the test element according to Example 1. The mixed indicator in the indicator layer turned color in 60 seconds. Comparing with color scale confirmed the ammonia concentration to be 2 ppm.

Test of sensitivity was made of an ammonium chloride solution containing 0.25 ppm ammonia by contacting it with the test element. The indicator layer turned color from yellow to light green in 120 seconds.

### Example 2

An absorbent layer was prepared from Ahlstrom paper impregnated with 12% solution of hydroxide and dried.

An indicator layer was prepared by dipping Ahlstrom polyester paper, spunbounded filtration grade No. 6613, into following solution:

| | |
|---|---|
| Bromcresol Green | 0.04 g |
| Polyvinylbutyral | 5.4 g |
| Polyvinylalcohol | 1.5 g |
| Polyvinylacetate | 2.6 g |
| Isopropylalcohol | 75 ml |

The dry indicator layer was, together with the absorbent layer, mounted on a plastic carrier chosen from polyvinylchloride, polystyrene, polycarbonate or polyethylene terephtalate.

A test was made of an ammonium chloride solution containing 5 ppm ammonia by contacting it with the test element according to Example 2. The indicator layer turned color from yellow to bluegreen in 2 minutes. Test of sensitivity was made of an ammonium chloride solution containing 0.5 ppm ammonia by contacting it with the test element. The indicator layer turned color from yellow to light green.

### Example 3

An absorbent layer was prepared from Ahlstrom paper impregnated with a 10% solution of lithium hydroxide and dried.

An indicator layer was prepared by dipping polypropylene sheet Pall 0.45 um filterite advanced material into the following solution:

| | |
|---|---|
| Bromcresol Purple | 0.03 g |
| Tetrabromphenolphtalein ethylester | 0.03 g |
| Polyvinylburyral | 6.6 g |
| Polyvinylacetate | 1.4 g |
| Polyvinylalcohol | 1.8 g |
| Ethanol | 50 ml |
| Isopropanol | 25 ml |

The dry indicator layer was, together with the absorbent layer, mounted on a plastic carrier chosen from polyvinylchloride, polystyrene, polycarbonate or polyethylene terephtalate.

A test was made of an ammonium chloride solution containing 5 ppm ammonia by contacting it with the test element according to Example 3. The indicator layer turned color to blue tint in 3 minutes. Test of sensitivity was made of an ammonium chloride solution containing 1 ppm ammonia by contacting it with the test element. The indicator layer turned color from yellow to light bluegreen.

Whereas specific embodiments of the invention have been described, various modifications of the present invention may be suggested to those skilled in the art. For example, sealing both absorbent and indicator layer between two plastic sheets, where at least one of them is transparent, or using some other possible sealing methods, such as ultrasonic, radio frequency, heated dies of insert molding may be employed.

## Claims

1. An integral one-step analysis unit for direct analysis of ammonia employing a single reagent pad comprising an indicator layer and an absorbent layer, wherein:
(i) said indicator layer comprises an ammonia indicator embedded in a continuous phase of a hydrophobic polymer so that gaseous ammonia, but not aqueous solutions, can penetrate the embedding hydrophobic polymer and reach the ammonia indicator.
(ii) said absorbent layer is buffered with hydroxide to maintain the equilibrium concentration of ammonia to obtain best test color change result; and
(iii) the indicator layer is attached to the absorbent layer.

2. The unit of claim 1, wherein the absorbent layer is fixed on a plastic carrier.

3. The unit of claim 1, wherein the hydrophobic polymer and indicator are soaked into a porous support.

4. The unit of claim 3, wherein the porous support is selected from the group consisting of polyester papers, polypropylene papers and membrane filters.

5. The unit of claim 1, wherein the hydrophobic polymer used in the indicator layer is a member of the group consisting of ethyl cellulose and a mixture of polyvinylbutyral, polyvinyl acetate and polyvinyl alcohol dissolved in ethanol or isopropanol.

6. The unit of claim 1, wherein the absorbent layer employs a material having a high absorption capacity and is selected from the group consisting of paper, cellulose, synthetic fleeces, glass fiber paper, woven and non-woven fabrics.

7. The unit of claim 6, wherein said absorption material is a bibulous material selected from filter papers and blotting paper.

8. The unit of claim 1, wherein the hydroxide used to buffer the absorbent layer is selected from the group consisting of sodium hydroxide, lithium hydroxide, calcium hydroxide, potassium hydroxide and barium hydroxide.

9. The unit of claim 1, wherein the indicator layer contains an ammonia indicator selected from the group consisting of bromphenol blue, tetrabromphenol blue, bromcresol green, bromcresol purple and tetrabromphenolphthalein ethylester.

10. The unit of claim 3 which further comprises a transparent adhesive layer for combining the indicator layer to the plastic carrier.
